# EUROPEAN PATENT APPLICATION

(11) **EP 4 517 499 A1**
(43) Date of publication of application: **05.03.2025**
(21) Application number: 22938745.1
(22) Date of filing: 28.04.2022
(51) Int. Cl.: G06F 3/04817, G06F 3/04845, G06F 3/0485

(54) **INFORMATION PROCESSING METHOD, INFORMATION PROCESSING DEVICE, AND PROGRAM**

(71) Applicant: NISSAN MOTOR CO., LTD., Kanagawa 221-0023 (JP)
(72) Inventor: NODA, Kenji, Atsugi-shi, Kanagawa 243-0123 (JP)
(74) Representative: Osha BWB
(86) International application number: PCT/JP2022/019368
(87) International publication number: WO 2023/209977

(57) **Abstract**

An information processing device (10) includes a controller (11) that controls screen display of a touch panel type display (1). The screen display includes a first layer (L1) positioned in front and a second layer (L2) positioned behind the first layer (L1). The controller (11) detects an operation on the screen display; when the operation on the screen display is a scroll operation, executes scroll processing of scrolling the first layer (L1); and when an object (W1 to W4) arranged on the first layer (L1) has been scrolled by the scroll processing and reached an edge of the screen display, executes transfer processing of transferring the object (W1 to W4) having reached the edge from the first layer (L1) to the second layer (L2).

## Description

### Technical Field

The present invention relates to an information processing method, information processing device, and program that control screen display of a touch panel type display.

### Background Art

A display method for a display device that displays objects in various ways according to a scroll speed is conventionally known (Patent Document 1). This display method includes a step of displaying at least one object on a screen, a user input reception step of receiving a direction for scrolling the at least one object, and a step of changing the size of an area in which the at least one object is displayed within the screen according to a scroll speed corresponding to the received user input and scrolling the at least one object according to a scroll method.

### Prior Art Document

### Patent Document

Patent Document 1: JP 2014-194773 A

### Summary of Invention

### Problems to Be Solved by Invention

The display method described in Patent Document 1 causes a problem that, when the object is scrolled and reaches an edge of the screen, the object is displayed as if it gradually disappears at the edge of the screen, which causes the user to feel a sense of discomfort with respect to the display of the object.

An object of the present invention is to provide an information processing method, information processing device, and program that suppress a sense of discomfort felt by a user with respect to the display of an object when the screen display is scrolled.

### Means for Solving Problems

The present invention solves the above-described problem by: detecting an operation on screen display including a first layer positioned in front and a second layer positioned behind the first layer; when the operation on the screen display is a scroll operation, executing scroll processing of scrolling the first layer; and when an object arranged on the first layer has been scrolled by the scroll processing and reached an edge of the screen display, executing transfer processing of transferring the object having reached the edge of the screen display from the first layer to the second layer.

### Effects of Invention

According to the present invention, it is possible to suppress a sense of discomfort felt by a user with respect to the display of an object when the screen display is scrolled.

### Brief Description of Drawings

FIG. 1 is a diagram illustrating a schematic configuration of an information presentation device according to the present embodiment.
FIG. 2 is diagrams illustrating an information presentation device and a display thereof according to the present embodiment.
FIG. 3 is diagrams illustrating a main layer and a sub layer.
FIG. 4 is diagrams illustrating processing by a widget transfer unit and a sub-layer display control unit.
FIG. 5 is a flowchart illustrating an exemplary information processing procedure according to the present embodiment.
FIG. 6 is diagrams illustrating states of screen transition by an information processing device according to a comparative example in response to a scroll operation.
FIG. 7 is diagrams illustrating states of screen transition by the information processing device according to the present embodiment in response to a scroll operation.
FIG. 8 is diagrams illustrating the rest of the screen transition illustrated in FIG. 7.
FIG. 9 is diagrams illustrating processing by the information processing device according to the present embodiment.

### Mode(s) for Carrying out the Invention

Hereinafter, an exemplary embodiment of the information processing method, information processing device, and program according to the present invention will be described with reference to attached drawings.

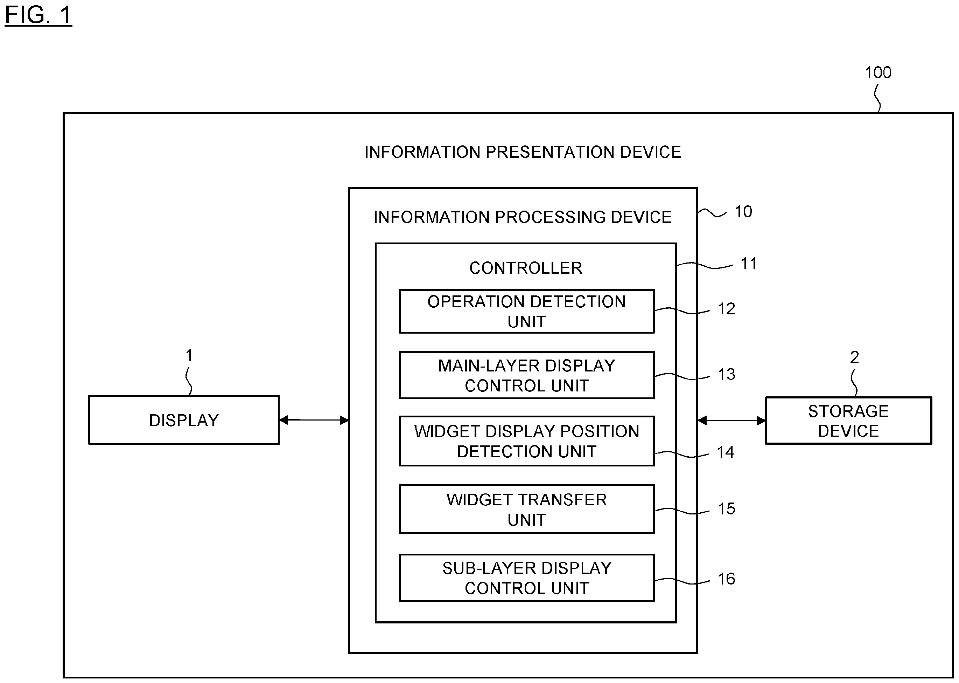

FIG. 1 is a diagram illustrating a schematic configuration of an information presentation device 100 according to the present embodiment. The information presentation device 100 is a device that is installed in a vehicle and presents various information to occupants. The information presentation device 100 presents, to the occupants, an operation screen for operating in-vehicle equipment such as a navigation device, audio equipment, and air-conditioning device, an operation screen (for example, providing map information for route guidance for the vehicle) of in-vehicle equipment operating in response to an occupant's operation, and the like.

As illustrated in FIG. 1, the information presentation device 100 includes a display 1, a storage device 2, and an information processing device 10, which serve as constituents thereof.

The display 1 is a touch panel type display and is mounted on the vehicle. The touch panel type display 1 includes a pressure sensor and detects a pressing force applied to the display 1 during a touch operation with reference to a resistance value, voltage, or the like. The pressure sensor is not particularly limited in mechanism, and any pressure sensor mechanism known at the time of filing of this application may be appropriately used. The touch panel is not limited to a pressure-sensitive type, and may be of any other type such as an electrostatic type. The display 1 is not particularly limited in type as long as it is the touch panel type display. The display 1 may be a liquid crystal display, or may be an organic electro-luminescence (OEL) display.

For example, the display 1 is arranged on a dashboard between a driver's seat and a front occupant seat. Further, the display 1 is located forward from the driver's seat and the front occupant seat so that a driver sitting on the driver's seat and an occupant sitting on the front occupant seat (hereinafter, referred to as front occupant) can reach with their hands.

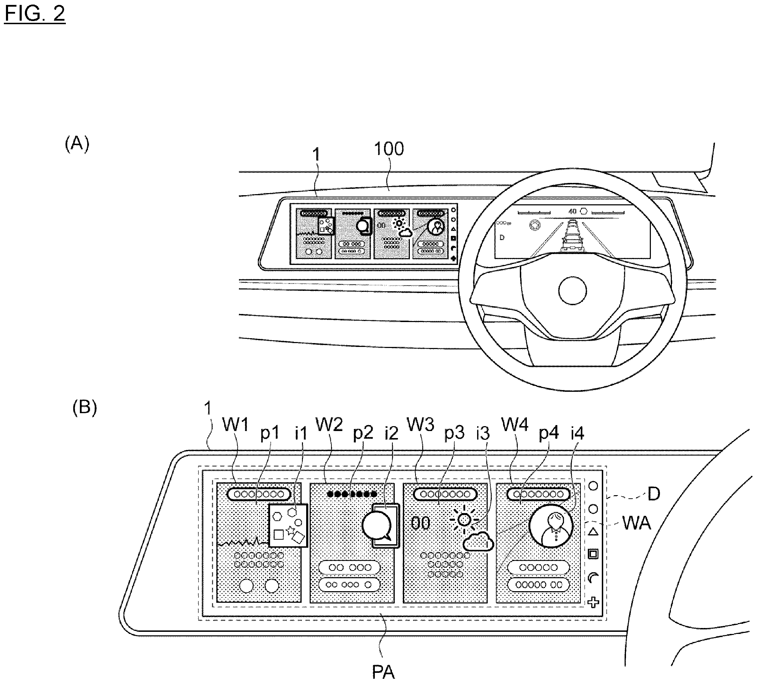

FIG. 2 is diagrams illustrating the information presentation device 100 and the display 1 according to the present embodiment. FIG. 2(A) is a diagram illustrating the interior of the vehicle, which includes examples of the information presentation device 100 and the display 1. For example, as illustrated in FIG. 2(A), the display 1 is located on the left side of a steering wheel when FIG. 2(A) is viewed from the front. In the present embodiment, the display 1 is a display whose shape is elongated in the right-and-left direction relative to the up-and-down direction. The driver and the front occupant input, to the display 1, operation content for the information presentation device 100, by performing a touch operation on the display 1. The touch operation is an operation of touching an object displayed on the display 1 with a finger or the like.

FIG. 2(B) is an enlarged view of the display 1 illustrated in FIG. 2(A), and is a diagram illustrating widgets to be operated by occupants. In the present embodiment, the widgets are illustrated as examples of the objects to be operated by occupants. Each widget is a shortcut of application software displayed on a home screen.

When the example illustrated in FIG. 2(B) is used for explanation, a screen display D of the display 1 includes a widget display area WA and a fixed display area PA (permanent area) provided around the widget display area WA. The widget display area WA and the fixed display area PA are adjacent to each other. The screen display D is an area that can be operated by the driver or front occupant, on the display 1. The widget display area WA is an area in which widgets W1 to W4 are displayed. In the widget display area WA, respective widgets W1 to W4 can be scroll-displayed in the left direction or the right direction, in response to the scroll operation of a main layer described below, when FIG. 2(B) is viewed from the front. The fixed display area PA is an area that displays specific information regardless of the scroll operation on the screen display D. That is, the specific information is continuously displayed in the fixed display area PA, regardless of the scroll display of widgets W1 to W4 in the widget display area WA. For example, the information displayed in the fixed display area PA includes setting temperature of a driver's side air conditioner, setting temperature of a front occupant's side air conditioner, current time, and icons indicating application software other than the widgets. In the following description, "application software" may be abbreviated to "application" or "app", but these terms are synonymous.

In the example of FIG. 2(B), the widgets W1 to W4 are displayed in a row from left to right in the widget display area WA, when FIG. 2(B) is viewed from the front. Each widget includes an icon portion that directly represents an application displayed in an easily identifiable manner, a panel portion that displays information about application software, and a shadow portion (not illustrated) that displays shadows on borders of the icon portion and the panel portion. The panel portion is wider than the icon portion, and the icon portion is displayed overlapping on the right side of a center line of the panel portion.

In the example of FIG. 2(B), the widget W1 includes a panel portion p1, an icon portion i1 displayed overlapping the panel portion p1, and a shadow portion s1. Although omitted in FIG. 2(B), the shadow portion s1 is provided at the border of the icon portion i1 and the border of the panel portion p1. The shadow portion is a type of visual effect that makes it easier to distinguish the border of the icon portion and the border of the panel portion. Explanations for the widgets W2 to W4 will be omitted, and the explanation for the widget W1 will be used instead. Note that applications represented by respective widgets are not particularly limited and examples thereof may include a calling app, a search app, a weather forecast app, a map app, and a music app.

Returning to FIG. 1, the touch operation by the driver or front occupant will be described. Touch operation includes tapping (touching the screen once), double tapping (touching the screen twice), long tapping (long pressing the screen), wiping (sliding a finger kept in contact with the screen across the screen (tracing the finger)), flicking (moving a finger kept in contact with the screen in a quick and flicking motion), pinch-in/pinch-out (touching the screen with two fingers and moving them closer/farther), dragging (long pressing an item on the screen with a finger and sliding it without releasing it), dropping (releasing a finger from the screen from a state where an item is long pressed with the finger for the drag operation), scrolling (moving a finger in the up-and-down direction or right-and-left direction on the screen without releasing the finger from the screen), and the like. Note that the touch operation is not required to directly touch the screen display of the display 1, and may include a so-called hovering for bringing a finger or the like close to the screen display. The touch operation method is not limited to these and may be a different method.

When the driver or front occupant performs a touch operation on the display 1, the display 1 detects the touched position on the screen display and outputs information about the detected position to the information processing device 10. Further, the display 1 outputs detection results by the pressure sensor, in addition to the touched position, to the information processing device 10. On the other hand, a control command for displaying image data is input to the display 1 from the information processing device 10. The display 1 displays one or more screens based on the image data.

The storage device 2 is a memory device represented by a hard disk drive (HDD), a solid state drive (SSD), or the like. The storage device 2 stores various data related to the information presentation device 100. For example, the storage device 2 stores, as information related to the widgets, image data of the icon portions, image data of the panel portions, image data of the shadow portions, and the like. In addition, the storage device 2 outputs the stored data to the information processing device 10 according to a control command from the information processing device 10. Further, the storage device 2 performs deletion of data, update of existing data, storage of new data, and so on, according to a control command from the information processing device 10.

The information processing device 10 is configured by a computer with hardware and software, and is more specifically configured by a read only memory (ROM) storing programs, a central processing unit (CPU) executing the programs stored in the ROM, and a random access memory (RAM) functioning as an accessible storage device. As an operation circuit, a micro processing unit (MPU), a digital signal processor (DSP), an application specific integrated circuit (ASIC), a field programmable gate array (FPGA), or the like can be used instead of or together with the CPU. A controller 11 illustrated in FIG. 1 is an entity that executes an information processing method according to the present invention, described below, and corresponds to the computer.

The present embodiment will be described using a configuration in which the programs to be executed by the information processing device 10 are stored beforehand in the ROM. However, the storage place of the programs is not limited to the ROM. For example, the programs may be stored in a portable computer-readable recording medium (e.g., a disk media, a flash memory, etc.), which can be read by the computer. In this case, the information processing device 10 downloads an intended program from the computer-readable recording medium, and executes the downloaded program. In other words, as an exemplary configuration, the information processing device 10 may include only the operation circuit and download each program from an external source.

As illustrated in FIG. 1, the controller 11 of the information processing device 10 includes, as functional blocks, an operation detection unit 12, a main-layer display control unit 13, a widget display position detection unit 14, a widget transfer unit 15, and a sub-layer display control unit 16.

The operation detection unit 12 detects, based on information input from the display 1, a touch operation performed on the display 1. The operation detection unit 12 receives, from the display 1, position information about the touch operation on the display 1 and detection results by the pressure sensor (such as a resistance value and/or a voltage indicating the pressing force). For example, based on information input from the display 1, the operation detection unit 12 determines whether the operation on the display 1 is any one of a tap operation, a double tap operation, a long tap operation, a swipe operation, a flick operation, a pinch-in/pinch-out operation, a drag operation, a drop operation, and a scroll operation. Note that the number of touch operations detectable by the operation detection unit 12 is not particularly limited, and for example, the operation detection unit 12 may detect that the touch operations on the display 1 are two types of touch operations that are discriminable as the drag operation and the scroll operation. The method for detecting the touch operation by the operation detection unit 12 can be a conventional detection method known at the time of filing of this application.

In addition, the operation detection unit 12 detects an operation direction of the touch operation based on information input from the display 1. For example, when determining that the operation on the display 1 is a scroll operation based on information input from the display 1, the operation detection unit 12 detects the scroll operation direction. The scroll operation direction corresponds to a direction along which the driver or front occupant moves a finger on the screen for the scroll operation. Examples of the scroll operation direction include, for example, an up-and-down direction (directing from top to bottom, or directing from bottom to top) and a right-and-left direction (directing from left to right, or directing from right to left). The touch operation detection processing executed by the operation detection unit 12 includes processing of detecting the scroll operation direction in the scroll operation.

In addition, the operation detection unit 12 detects an operation speed in the touch operation based on information input from the display 1. For example, when determining that the operation on the display 1 is a scroll operation based on information input from the display 1, the operation detection unit 12 detects the operation speed in the scroll operation. The operation speed in the scroll operation corresponds to a moving speed of a finger of the driver or front occupant on the screen, when moving the finger in the up-and-down direction or right-and-left direction, in the scroll operation. The touch operation detection processing executed by the operation detection unit 12 includes processing of detecting the operation speed in the scroll operation.

The main-layer display control unit 13 controls, in response to a touch operation detected by the operation detection unit 12, the display of the main layer that constitutes the screen display of the display 1. In the present embodiment, the screen display of the display 1 includes the main layer positioned in front and the sub layer positioned behind the main layer, which serve as constituents. When the screen display of the display 1 is viewed from the front, the main layer is positioned in front of the sub layer.

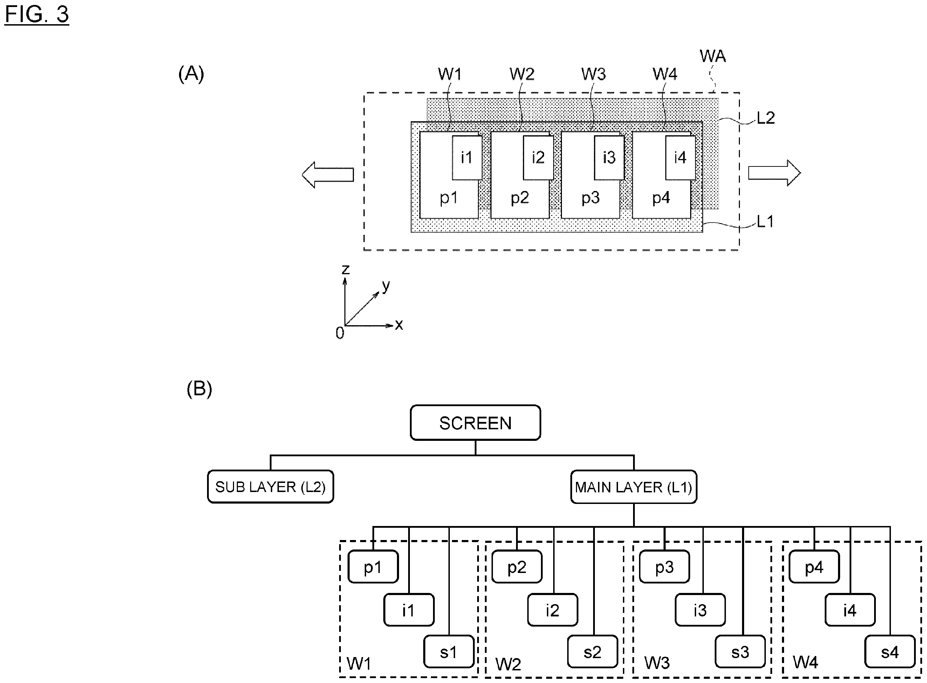

Here, with reference to FIG. 3, the main layer and the sub layer that configure the screen display will be described. FIG. 3 is diagrams illustrating the main layer and the sub layer. FIG. 3(A) is a schematic diagram illustrating the widget display area WA illustrated in FIG. 2(B). In FIG. 3(A), constituents similar to those in FIG. 2(B) are denoted by the same reference numerals as those illustrated in FIG. 2(B). Further, in FIG. 3(A), the x-axis indicates a vehicle width direction (right-and-left direction), the y-axis indicates the depth in a vehicle advancing direction (ongoing direction), and the z-axis indicates a height direction (up-and-down direction).

As illustrated in FIG. 3(A), the widget display area WA includes a main layer L1 that is a display layer aligned along the x-axis and the z-axis and a sub layer L2 that is a display layer deviated toward the positive-direction side of the y-axis from the main layer L1 and aligned along the x-axis and the z-axis. The main layer L1 and the sub layer L2 form a hierarchical structure in which the main layer L1 is positioned on the front side and the sub layer L2 is positioned on the behind side. The main layer L1 and the sub layer L2 are not particularly limited in size. In the present embodiment, the main layer L1 and the sub layer L2 are described as display layers having the same size. The main layer L1 and the sub layer L2 are wide enough to align the widgets W1 to W4 in a row in the right-and-left direction.

When the widgets W1 to W4 are arranged on the main layer L1 with the positional relationship illustrated in FIG. 3(A), the screen display D (the widget display area WA) is displayed on the display 1 as illustrated in FIG. 2(B). In the example illustrated in FIG. 3(A), the widgets W1 to W4 belong to the main layer L1 as illustrated in FIG. 3(B). The widget belonging to the main layer L1 is displayed as a widget arranged on the main layer L1 of the display 1. FIG. 3(B) is a diagram illustrating the belonging destination of each widget in correspondence with the screen display of FIG. 3(A). The role and function of the sub layer L2 will be described below.

When the touch operation detected by the operation detection unit 12 is a scroll operation, the main-layer display control unit 13 executes scroll processing of scrolling the main layer. The scroll processing by the main-layer display control unit 13 includes outputting, to the display 1, a control command for scrolling the main layer in a direction corresponding to the scroll operation direction detected by the operation detection unit 12. In the example illustrated in FIG. 3(A), when a scroll operation directed from left to right along the x-axis is detected, the main-layer display control unit 13 outputs, to the display 1, a control command for scrolling the main layer L1 from left to right. As a result, the display 1 displays a screen in which the main layer L1 including the widgets W1 to W4 is entirely scrolled from left to right. Further, in the example of FIG. 3(A), when a scroll operation directed from right to left along the x-axis is detected, the main-layer display control unit 13 outputs, to the display 1, a control command for scrolling the main layer L1 from right to left. As a result, the display 1 displays a screen in which the main layer L1 including the widgets W1 to W4 is entirely scrolled from right to left. In the present embodiment, the scroll operation direction will be described as being the right-and-left direction as an example.

In addition, the scroll processing by the main-layer display control unit 13 includes executing processing of delaying scroll display of the icon portion of widget relative to scroll display of the panel portion. For example, when the touch operation detected by the operation detection unit 12 is a scroll operation, the main-layer display control unit 13 outputs, to the display 1, a control command for scrolling the icon portion of widget with a delay relative to the panel portion. As a result, after the scroll operation, the display 1 displays a screen in which the icon portion scrolls with a delay relative to the panel portion. In other words, after the scroll operation, the display 1 displays an animation screen in which the icon portion follows the panel portion. There is no particular limitation on the distance and delay with which the icon portion scrolls relative to the panel portion. The display control method by the main-layer display control unit 13 can be a conventional display control method known at the time of filing this application. The scroll processing executed by the main-layer display control unit 13 includes processing of delaying scroll display of the icon portion of widget relative to scroll display of the panel portion.

Further, the scroll processing by the main-layer display control unit 13 includes executing processing of changing the scroll display speed of widget according to the operation speed in the scroll operation. The scroll display speed corresponds to the moving speed of widget on the screen. For example, the main-layer display control unit 13 outputs, to the display 1, a control command for making the scroll display speed of widget faster as the operation speed becomes faster in the scroll operation. As a result, the display 1 displays a screen in which the widget moves faster on the screen as the operation speed becomes faster in the scroll operation. The scroll processing executed by the main-layer display control unit 13 includes processing of changing the scroll display speed of widget according to the operation speed in the scroll operation. Further, the scroll processing executed by the main-layer display control unit 13 includes processing of making the scroll display speed of widget faster as the operation speed becomes faster in the scroll operation. In the present embodiment, the scroll processing by the main-layer display control unit 13 includes scrolling the sub layer in conjunction with the main layer. That is, the main-layer display control unit 13 outputs, to the display 1, a control command for scrolling the sub layer in the same scroll direction as the main layer and at the same display speed as the scroll display speed of the main layer.

Further, in response to a touch operation on the display 1, the main-layer display control unit 13 executes display control other than the scroll display. For example, when the operation on the display 1 is a tap operation and the tapped object is a specific widget, the main-layer display control unit 13 outputs, to the display 1, a control command for displaying a screen of an application corresponding to the tapped widget. Note that the tap operation processing is merely one example, and the main-layer display control unit 13 can execute display control other than the conventional scroll display known at the time of filing this application, in response to a touch operation on the display 1.

Returning to FIG. 1, the functional blocks of the information processing device 10 will be described. When the scroll processing is started by the main-layer display control unit 13, the widget display position detection unit 14 detects the display position of the widget on the display 1. The widget display position detection unit 14 determines whether the widget arranged on the main layer has been scrolled by the scroll processing and reached an edge of the screen display of the display 1. As described in the present embodiment, when the screen display of the display 1 includes the fixed display area in addition to the widget display area (see FIG. 2(B)), the widget display position detection unit 14 sets, as the edge of the screen display, the boundary between the widget display area and the fixed display area. Further, as described in the present embodiment, when the scroll processing of delaying scroll display of the icon portion of widget relative to scroll display of the panel portion is executed, the panel portion reaches the edge of the screen display earlier than the icon portion. Therefore, the widget display position detection unit 14 determines whether the panel portion of widget has reached the edge of the screen display.

When the widget display position detection unit 14 determines that the widget on the main layer has been scrolled by the scroll processing and reached the edge of the screen display of the display 1, the widget transfer unit 15 executes transfer processing of transferring the widget having reached the edge of the screen display from the main layer to the sub layer. In the present embodiment, for the widget whose panel portion has reached the boundary between the widget display area and the fixed display area, the widget transfer unit 15 executes transfer processing of entirely transferring the widget including the panel portion, the icon portion, and the shadow portion, from the main layer to the sub layer. The transfer processing by the widget transfer unit 15 includes outputting, to the display 1, a control command for changing the belonging destination of the widget having reached the edge of the screen display from the main layer to the sub layer. Further, the transfer processing by the widget transfer unit 15 includes outputting, to the display 1, a control command to display the widget transferred to the sub layer while holding the relationship between scroll display of the panel portion and scroll display of the icon portion on the main layer. The transfer processing executed by the widget transfer unit 15 includes processing of changing the belonging destination of the widget having reached the edge of the screen display from the main layer to the sub layer to display the widget on the display 1 as a widget arranged on the sub layer. Further, the transfer processing executed by the widget transfer unit 15 includes processing of displaying the widget transferred to the sub layer on the display 1 while holding the relationship between scroll display of the panel portion and scroll display of the icon portion on the main layer.

Further, the transfer processing by the widget transfer unit 15 includes arranging the widget on the sub layer such that the widget transferred to the sub layer is displayed on the inside of the edge of the screen display. As described in the present embodiment, when the boundary between the widget display area and the fixed display area is set as the edge of the screen display, the widget transfer unit 15 arranges the widget on the sub layer such that the widget transferred to the sub layer is displayed on the inside of the boundary between the widget display area and the fixed display area, that is, on the widget display area side. The transfer processing by the widget transfer unit 15 includes outputting, to the display 1, a control command for displaying the widget transferred to the sub layer on the inside of the edge of the screen display. This makes it possible to prevent the fixed display area from being displayed overlapping the widget transferred to the sub layer, and therefore displaying the widget transferred to the sub layer is feasible. Further, the transfer processing executed by the widget transfer unit 15 includes processing of displaying the widget transferred to the sub layer on the inside of the edge of the screen display.

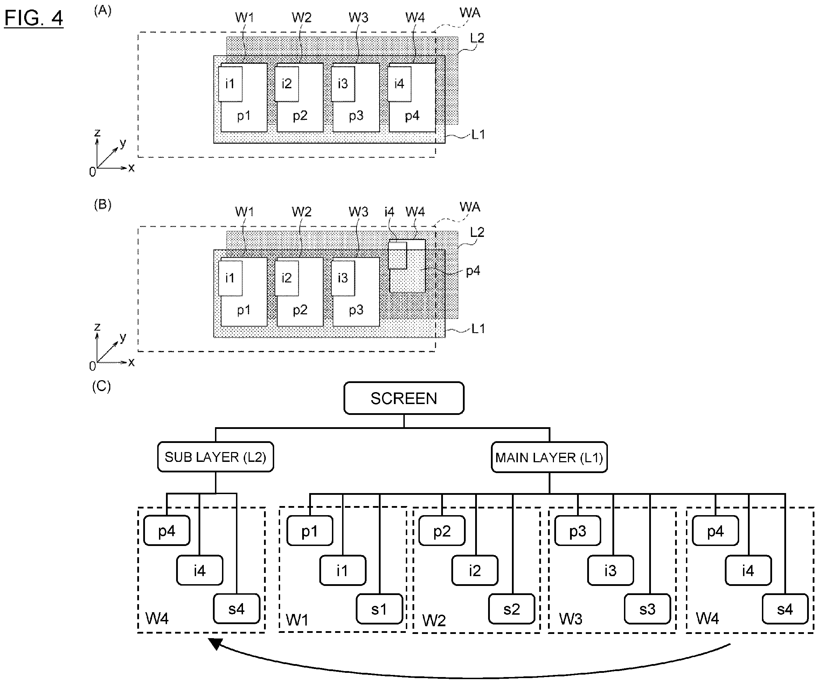

FIG. 4 is diagrams illustrating processing by the widget transfer unit 15 and the sub-layer display control unit 16 described below. FIG. 4(A) is a diagram illustrating a state where, after a scroll operation from left to right performed on the screen display illustrated in FIG. 3(A), the panel portion p4 of widget W4 has reached the boundary between the widget display area WA and the fixed display area PA. FIG. 4(B) is a diagram illustrating a state where the transfer processing by the widget transfer unit 15 and the display control processing by the below-described sub-layer display control unit 16 have been executed on the screen display illustrated in FIG. 4(A). FIG. 4(C) is a diagram illustrating the transfer processing by the widget transfer unit 15.

As illustrated in FIG. 4(A), when an edge positioned in the scroll direction among edges of the panel portion p4 has reached the boundary between the widget display area WA and the fixed display area PA, the widget transfer unit 15 outputs, to the display 1, a control command for changing the belonging destination of widget W4 from the main layer L1 to the sub layer L2, as illustrated in FIG. 4(C). As a result, as illustrated in FIG. 4(B), the widget W4 is displayed as a widget arranged on the sub layer L2, that is, a widget positioned behind the main layer L1, on the display 1. Further, when the icon portion i4 is scrolled with a delay relative to the panel portion p4 in the scroll display of main layer L1, the widget transfer unit 15 outputs, to the display 1, a control command to transfer to the sub layer and display the widget W4 while holding the relationship between scroll display of the panel portion p4 and scroll display of the icon portion i4 on the main layer L1. As a result, as illustrated in FIG. 4(B), the panel portion p4 and the icon portion i4 are displayed on the sub layer L2 while the positional relationship between the panel portion p4 and the icon portion i4 on the main layer L1 illustrated in FIG. 4(A) is held. Further, the widget transfer unit 15 outputs, to the display 1, a control command for displaying the widget W4 transferred to the sub layer on the inside of the boundary between the widget display area WA and the fixed display area PA. As a result, as illustrated in FIG. 4(B), the widget W4 transferred to the sub layer L2 is displayed inside the widget display area WA.

The sub-layer display control unit 16 controls the display of the sub layer that constitutes the screen display of the display 1. The sub-layer display control unit 16 executes transparency change processing and size change processing on the widget transferred from the main layer to the sub layer by the widget transfer unit 15. The transparency change processing is processing of changing the transparency of the widget compared to that before being transferred to the sub layer. The size change processing is processing of changing the size of the widget compared to that before being transferred to the sub layer.

In the present embodiment, the transparency change processing by the sub-layer display control unit 16 includes outputting, to the display 1, a control command for increasing the transparency of the widget transferred to the sub layer compared to that before being transferred to the sub layer.

In the transparency change processing, the absolute value of the widget transparency is not particularly limited, the sub-layer display control unit 16 outputs, to the display 1, a control command for relatively increasing the transparency of the widget transferred to the sub layer compared to that before being transferred to the sub layer. As a result, as illustrated in FIG. 4(B), the widget W4 transferred to the sub layer L2 is displayed more transparently than the widget W4 illustrated in FIG. 4(A). Therefore, the movement of the widget W4 to the rear side of the screen can be visually expressed. As a result, the driver or front occupant can easily grasp the front-back relationship of the widget W1 to widget W3 on the main layer L1.

In addition, in the present embodiment, the size change processing by the sub-layer display control unit 16 includes outputting, to the display 1, a control command for decreasing the size of the widget transferred to the sub layer compared to that before being transferred to the sub layer. In the size change processing, the absolute value of the widget size is not particularly limited, and the sub-layer display control unit 16 outputs, to the display 1, a control command for relatively decreasing the size of the widget transferred to the sub layer compared to that before being transferred to the sub layer. As a result, as illustrated in FIG. 4(B), the widget W4 transferred to the sub layer L2 is displayed smaller than the widget W4 illustrated in FIG. 4(A). Therefore, the movement of the widget W4 to the rear side of the screen can be visually expressed. As a result, the driver or front occupant can easily grasp the front-back relationship of the widget W1 to widget W3 on the main layer L1.

Further, when multiple widgets are transferred to the sub layer, the sub-layer display control unit 16 executes transparency change processing and size change processing, for each widget transferred to the sub layer, according to the transfer order to the sub layer. The sub-layer display control unit 16 controls the transparency of each widget transferred to the sub layer such that the transparency increases in the transfer order to the sub layer. In other words, the sub-layer display control unit 16 executes processing of increasing the transparency of the widget as the transfer order of the widget to the sub layer is earlier. As a result, the earlier the panel portion reaches the edge of the screen display, the more transparent the displayed widget is on the sub layer. In addition, the sub-layer display control unit 16 controls the size of each widget transferred to the sub layer such that the size decreases in the transfer order to the sub layer. In other words, the sub-layer display control unit 16 executes processing of decreasing the widget size as the transfer order of the widget to the sub layer is earlier. As a result, the earlier the panel portion reaches the edge of the screen display, the smaller the widget is displayed on the sub layer. In addition, the sub-layer display control unit 16 controls the placement of each widget on the sub layer such that the widgets are positioned from the back of the screen (ongoing direction of the vehicle) to the front of the screen (backward direction of the vehicle) in the transfer order to the sub layer. In other words, the sub-layer display control unit 16 executes image processing in such a manner that, the earlier the transfer order to the sub layer is, the deeper the widget looks to be positioned on the sub layer. As a result, the earlier the panel portion reaches the edge of the screen display, the deeper the displayed widget is positioned on the sub layer. An exemplary case in which multiple widgets are transferred to the sub layer will be described below.

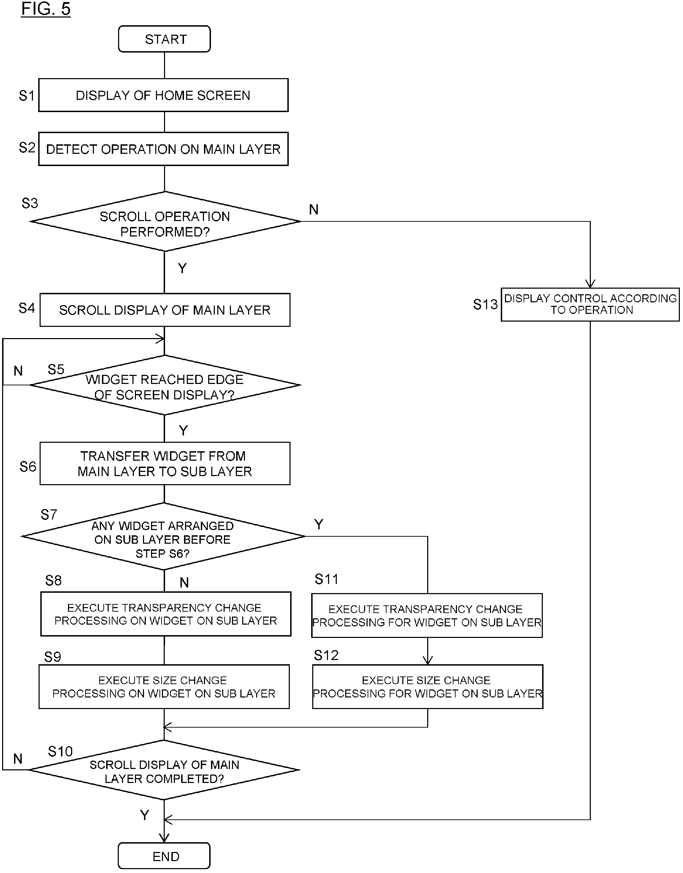

Next, an information processing method that the controller 11 executes will be described with reference to FIG. 5. FIG. 5 is a flowchart illustrating an exemplary information processing procedure according to the present embodiment. Each processing in the flowchart of FIG. 5 is executed by the controller 11.

In step S1, the controller 11 acquires information about the home screen from the storage device 2, and outputs a control command for displaying the home screen to the display 1. The display 1 displays the home screen, based on the control command (including image data) input from the controller 11. As exemplarily illustrated in the FIG. 2(B), the home screen includes, as constituents thereof, the widget display area WA in which the widgets W1 to W4 are displayed and the fixed display area PA provided around the widget display area WA. The controller 11 outputs, to the display 1, a control command to display the fixed display area PA at upper and lower edges and right and left edges of the screen display D. The widgets W1 to W4 are arranged on the main layer L1 as exemplarily illustrated in FIG. 3(A).

In step S2, the controller 11 detects a touch operation on the screen display of the display 1. The controller 11 determines the type of the touch operation, based on information input from the display 1. In step S3, the controller 11 determines, based on a processing result in step S2, whether the operation on the screen display is a scroll operation. When the controller 11 makes an affirmative determination, the processing proceeds to step S4. When the determination made is negative , the processing proceeds to step S13.

When the determination made in step S3 is negative , the processing proceeds to step S13. In step S13, the controller 11 executes display control of the display according to the operation on the screen display based on the processing result in step S2. For example, when the operation on the display 1 is a tap operation and the tapped object is a widget, the controller 11 outputs, to the display 1, a control command for displaying a screen of an application corresponding to the tapped widget. When the processing of step S13 is completed, the controller 11 terminates the processing of the flowchart illustrated in FIG. 3.

On the other hand, when the determination made in step S3 is affirmative, the processing proceeds to step S4. In step S4, the controller 11 executes scroll processing of scrolling the main layer constituting the screen display based on the processing result in step S2. For example, the controller 11 identifies the scroll direction based on the scroll operation direction in the scroll operation. Further, for example, the controller 11 identifies the scroll operation speed based on the operation speed in the scroll operation. The scroll processing by the controller 11 includes outputting, to the display 1, a control command for scrolling the main layer in a direction corresponding to the scroll operation direction. Further, the controller 11 outputs, to the display 1, a control command for making the scroll display speed of widget faster as the operation speed becomes faster in the scroll operation. Further, the scroll processing by the controller 11 includes outputting, to the display 1, a control command for scrolling the icon portion with a delay relative to the panel portion. The processing in step S4 causes the display 1 to display a screen in which the main layer including widgets is entirely scrolled in the scroll direction.

In step S5, the controller 11 determines whether the widget arranged on the main layer has been scrolled by the scroll processing of step S4 and reached the edge of the screen display of the display 1. in the present embodiment, the controller 11 determines whether the panel portion has reached the boundary between the widget display area (the main layer) and the fixed display area. When the controller 11 makes an affirmative determination, the processing proceeds to step S6. When the determination made is negative, the processing waits in step S5 until an affirmative determination is made.

In step S6, the controller 11 executes transfer processing of transferring the widget determined in step S5 as having reached the edge of the screen display from the main layer to the sub layer. The transfer processing by the controller 11 includes outputting, to the display 1, a control command for changing the belonging destination of the widget having reached the edge of the screen display from the main layer to the sub layer. In addition, the transfer processing by the controller 11 includes outputting, to the display 1, a control command to display the widget transferred to the sub layer while holding the relationship between scroll display of the panel portion and scroll display of the icon portion on the main layer. Further, the transfer processing by the controller 11 includes outputting, to the display 1, a control command for displaying the widget transferred to the sub layer on the inside of the edge of the screen display.

In step S7, the controller 11 determines whether there is any widget arranged on the sub layer before step S6. For example, before executing the transfer processing in step S6, the controller 11 determines the presence of any widget belonging to the sub layer. When the controller 11 determines that there is no widget belonging to the sub layer, that is, when the transfer processing in step S6 is performed for a first time in the flowchart illustrated in FIG. 5, the processing proceeds to step S8. On the other hand, when the controller 11 determines the presence of one or more widgets belonging to the sub layer, that is, when transfer processing in step S6 is the second or subsequent transfer processing in the flowchart illustrated in FIG. 5, the processing proceeds to step S11.

When the determination made in step S7 is negative, the processing proceeds to step S8. In step S8, the controller 11 executes transparency change processing of changing the transparency of the widget when it has been transferred to the sub layer from the main layer by the processing of step S6 compared to that before being transferred to the sub layer. The transparency change processing by the controller 11 includes outputting, to the display 1, a control command for increasing the transparency of the widget transferred to the sub layer compared to that before being transferred to the sub layer.

In step S9, the controller 11 executes size change processing of changing the size of the widget when it has been transferred to the sub layer from the main layer by the processing of step S6 compared to that before being transferred to the sub layer. The size change processing by the controller 11 includes outputting, to the display 1, a control command for decreasing the size of the widget transferred to the sub layer compared to that before being transferred to the sub layer.

In step S10, the controller 11 determines whether the scroll display of main layer has been completed by the scroll processing of step S4. For example, the controller 11 determines whether the edge of main layer positioned in the direction opposite to the scroll direction has reached the edge of the screen display. When the edge of main layer has reached the edge of the screen display, the controller 11 determines that the scroll display of main layer has been completed. On the other hand, when the edge of main layer has not yet reached the edge of the screen display, the controller 11 determines that the scroll display of main layer is not yet completed. Further, for example, the controller 11 may determine whether there is any widget belonging to the main layer. In this case, when there is no widget belonging to the main layer, the controller 11 determines that the scroll display of main layer has been completed. On the other hand, when at least one widget belongs to the main layer, the controller 11 determines that the scroll display of main layer is not yet completed. When the controller 11 makes an affirmative determination, the controller 11 terminates the processing of the flowchart illustrated in FIG. 5. On the other hand, when the controller 11 makes a negative determination, the processing returns to step S5 and repetitively executes the processing of steps S5 to S12 until an affirmative determination is made in step S10.

When the determination in step S7 is affirmative, the processing proceeds to step S11. In step S11, the controller 11 executes transparency change processing of changing the transparency of the widget when it has been transferred to the sub layer from the main layer by the processing of step S6 compared to that before being transferred to the sub layer. This transparency change processing by the controller 11 corresponds to the processing in step S8. Further, in step S11, the controller 11 executes transparency change processing that is different from the processing in step S8. The controller 11 executes transparency change processing of changing the transparency of the widget when it is arranged on the sub layer before step S6 compared to that before the processing of step S6 is executed. The transparency change processing by the controller 11 includes outputting, to the display 1, a control command for increasing the transparency of the widget arranged on the sub layer before step S6 compared to that before the processing in step S6 is executed.

In step S12, the controller 11 executes size change processing of changing the size of the widget when it has been transferred to the sub layer from the main layer by the processing of step S6 compared to that before being transferred to the sub layer. This size change processing by the controller 11 corresponds to the processing in step S9. In addition, in step S12, the controller 11 executes size change processing that is different from the processing in step S9. The controller 11 executes size change processing of changing the size of the widget when it is arranged on the sub layer before step S6 compared to that before the processing of step S6 is executed. The size change processing by the controller 11 includes outputting, to the display 1, a control command for decreasing the size of the widget arranged on the sub layer before step S6 compared to that before the processing in step S6 is executed.

When the processing of step S12 is completed, the processing proceeds to step S10 and, as described above, the controller 11 determines whether the scroll display of main layer has been completed by the scroll processing of step S4.

Next, with reference to a comparative example, a problem that may be caused by the scroll display will be described. It is assumed that an information processing device according to the comparative example is different from the information processing device 10 according to the present embodiment in not having the functions corresponding to the widget display position detection unit 14, the widget transfer unit 15, and the sub-layer display control unit 16, but the rest of its functions are comparable to those of the information processing device 10 according to the present embodiment.

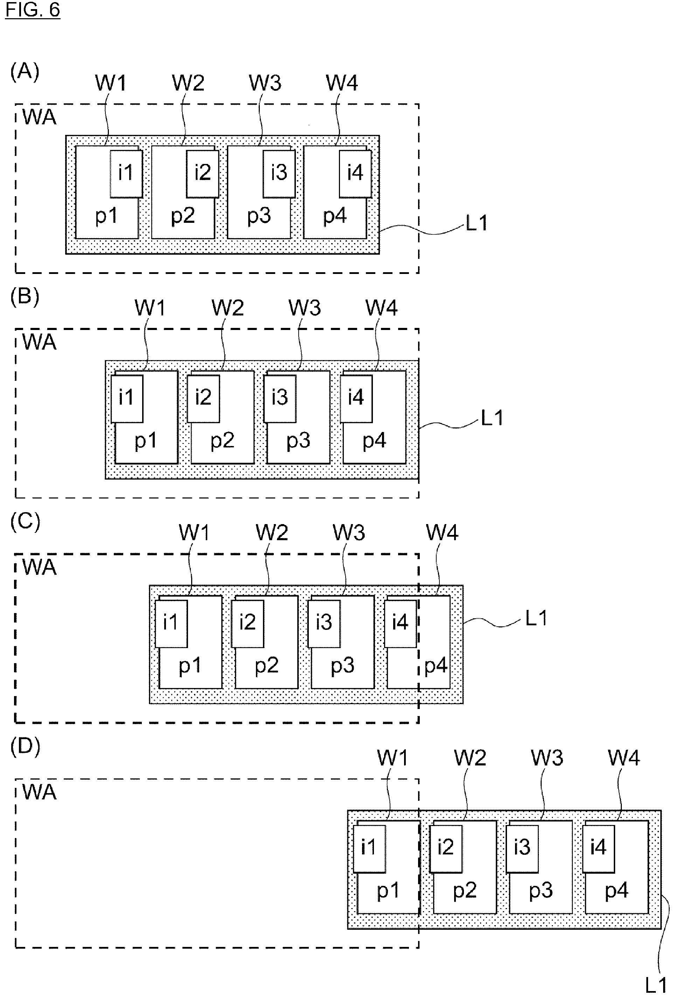

FIG. 6 is diagrams illustrating states of screen transition by the information processing device according to the comparative example in response to the scroll operation.

### (Comparative Example) Operation for Scrolling Screen Display (Scroll from Left to Right)

From the state where the home screen including the widgets W1 to W4 is displayed on the display 1 (FIG. 6(A)), the driver or front occupant moves a finger from left to right on the screen to scroll the screen display when FIG. 6(A) is viewed from the front (scroll operation). The information processing device according to the comparative example determines that the type of touch operation on the screen display is a scroll operation, and detects the scroll direction and the operation speed in scroll operation. The information processing device according to the comparative example outputs, to the display 1, a control command for scrolling the icon portion of widget from left to right with a delay relative to the panel portion. When a predetermined time has elapsed since the scroll of the main layer L1 from left to right, the panel portion p4 of widget W4 reaches the boundary between the widget display area WA and the fixed display area PA (FIG. 6(B)). Here, unlike the present embodiment, the information processing device according to the comparative example does not execute any processing on the widget W4 having reached the edge of the screen display. Therefore, the display 1 displays a screen in which the panel portion p4 of widget W4 gradually disappears from the edge of the screen display (FIG. 6(C)). Further, the elapse of a predetermined time may result in the display on the display 1 with a screen in which the widget W4, widget W3, and widget W2 have gradually disappeared in this order from the edge of the screen display (FIG. 6(D)). The scroll operation followed by such a display as if the widget gradually disappears from the edge of the screen display will cause a problem that the driver or front occupant may feel a sense of discomfort with respect to the display of widget.

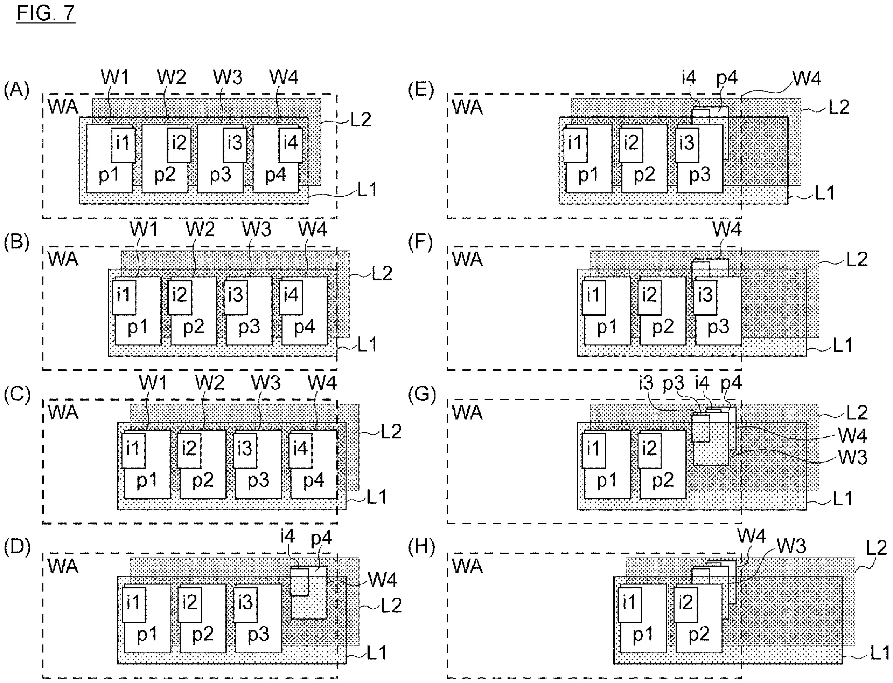

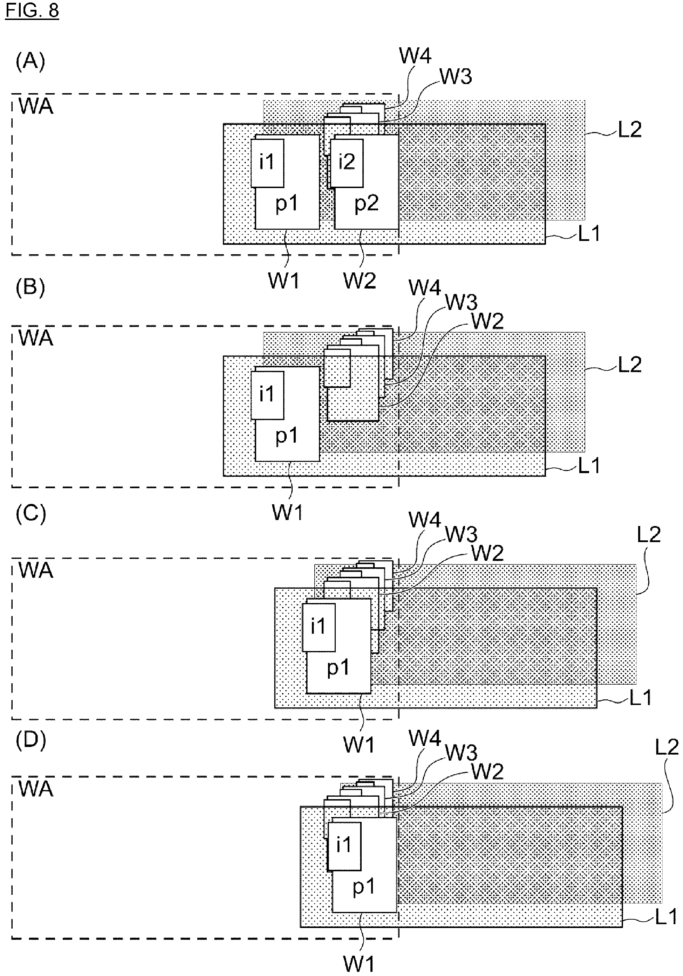

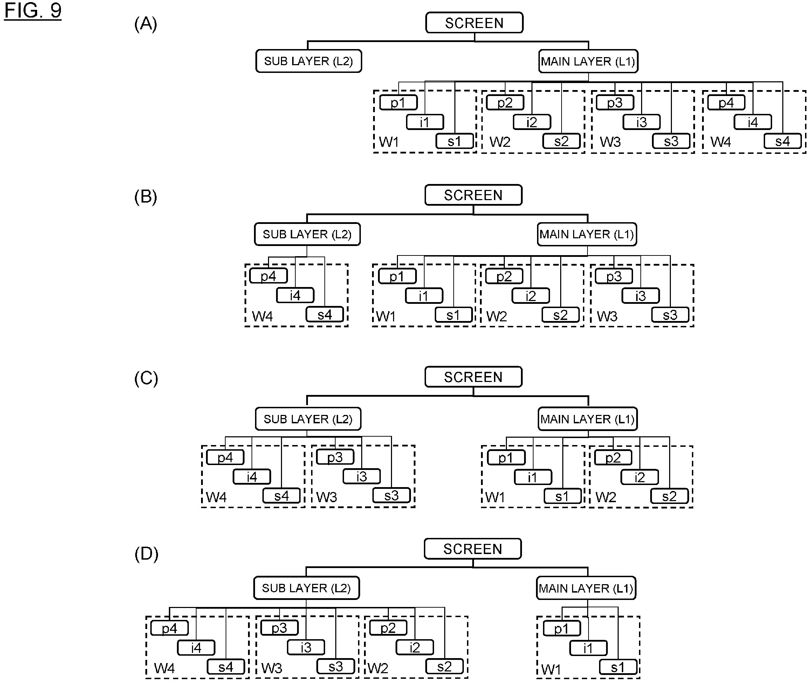

FIG. 7 is diagrams illustrating states of screen transition by the information processing device 10 according to the present embodiment in response to the scroll operation. FIG. 8 is diagrams illustrating the rest of the screen transition illustrated in FIG. 7. FIG. 9 is diagrams illustrating processing by the information processing device 10 according to the present embodiment.

### (Present Embodiment) Operation for Scrolling Screen Display (Scroll from Left to Right)

In a state where a home screen including the widgets W1 to W4 is displayed on the display 1 (FIG. 7(A)), as illustrated in FIG. 9(A), the widgets W1 to W4 belong to the main layer L1. From this state, the driver or front occupant moves a finger from left to right on the screen to scroll the screen display when FIG. 7(A) is viewed from the front (scroll operation). The information processing device 10 determines that the type of the touch operation on the screen display is a scroll operation, and detects the scroll direction and operation speed in the scroll operation. The information processing device 10 outputs, to the display 1, a control command for scrolling the icon portion of widget from left to right with a delay relative to the panel portion. The display 1 displays a screen in which the icon portion is scrolled from left to right with a delay relative to the panel portion (FIG. 7(B)).

When a predetermined time has elapsed since the scroll of the main layer L1 from left to right, the panel portion p4 of widget W4 reaches the boundary between the widget display area WA and the fixed display area (FIG. 7(C)). In this state, the information processing device 10 outputs, to the display 1, a control command for changing the belonging destination of widget W4 from the main layer L1 to the sub layer L2, as illustrated in FIG. 9(B). In addition, the information processing device 10 outputs, to the display 1, a control command to display the widget W4 transferred to the sub layer L2 while holding the relationship between scroll display of the panel portion p4 and scroll display of the icon portion i4 on the main layer L1. In addition, the information processing device 10 outputs, to the display 1, a control command for increasing the transparency of widget W4 transferred to the sub layer L2 compared to that before being transferred to the sub layer L2. In addition, the information processing device 10 outputs, to the display 1, a control command for decreasing the size of widget W4 transferred to the sub layer L2 compared to that before being transferred to the sub layer L2. In addition, the information processing device 10 outputs, to the display 1, a control command for displaying the widget W4 transferred to the sub layer L2 on the inside of the edge of the screen display. As a result, the display 1 displays a smaller and transparent widget W4 positioned further back than the widget W4 illustrated in FIG. 7(C), on the screen (FIG. 7(D)).

From the scene illustrated in FIG. 7(D), when a predetermined time has elapsed (FIG. 7(E)), the panel portion p3 of widget W3 reaches the boundary between the widget display area WA and the fixed display area PA (FIG. 7(F)). In this state, the information processing device 10 outputs, to the display 1, a control command for changing the belonging destination of widget W3 from the main layer L1 to the sub layer L2, as illustrated in FIG. 9(C). In addition, the information processing device 10 outputs, to the display 1, a control command to display the widget W3 transferred to the sub layer L2 while holding the relationship between scroll display of the panel portion p3 and scroll display of the icon portion i3 on the main layer L1.

In addition, the information processing device 10 outputs, to the display 1, a control command for increasing the transparency of widget W4 compared to that before the widget W3 is transferred to the sub layer L2. In addition, the information processing device 10 outputs, to the display 1, a control command for increasing the transparency of widget W3 transferred to the sub layer L2 compared to that before being transferred to the sub layer L2, and making the increased transparency lower than that of the transparency of widget W4. As a result, the widget W4 on the sub layer L2 is displayed more transparently compared to that of the widget W3 before it is transferred to the sub layer L2 (FIG. 7(G)). Further, the widget W3 on the sub layer L2 is displayed more transparently compared to that before being transferred to the sub layer L2. The transparency of widget W4 becomes higher than the transparency of widget W3, and the widget W4 is displayed more transparently than the widget W3 (FIG. 7(G)).

In addition, the information processing device 10 outputs, to the display 1, a control command for decreasing the size of widget W4 compared to that before the widget W3 is transferred to the sub layer L2. In addition, the information processing device 10 outputs, to the display 1, a control command for making the size of widget W3 transferred to the sub layer L2 smaller than that before being transferred to the sub layer and larger than the size of widget W4. As a result, the widget W4 on the sub layer L2 is displayed smaller than that before the widget W3 is transferred to the sub layer L2 (FIG. 7(G)). Further, the widget W3 on the sub layer L2 is displayed smaller than that before being transferred to the sub layer L2. The size of widget W4 becomes smaller than the size of widget W3, and the widget W4 is displayed smaller than the widget W3 (FIG. 7(G)).

In addition, the information processing device 10 outputs, to the display 1, a control command for adjusting the placement of the widgets W3 and W4 on the sub layer L2, as a visual control command, such that the widget W4 and the widget W3 are displayed in this order along a direction from the back of screen to the front of screen. As a result, the widget W4 is displayed on the sub layer L2 as if it were positioned deeper than the widget W3 on the screen (FIG. 7(G)).

In this manner, controlling the transparency, size, and placement of the widgets on the sub layer brings such an effect that, the earlier the widget is transferred to the sub layer, the more transparently, smaller, and deeper it is displayed on the sub layer. This makes it possible to give the driver or front occupant a visual effect of successive fading out of the widgets toward the back side of screen upon reaching the edge of the screen display in the scrolled operation.

Although screen transitions illustrated in FIG. 7(H) and FIGS. 8(A) to 8(D) will not be described in detail, each time when the panel portion of widget reaches the boundary between the widget display area and the fixed display area, the information processing device 10 repetitively executes the widget belonging destination change processing and the transparency change processing and size change processing on the widget transferred to the sub layer. As a result, as the time elapses, the display 1 displays the screens illustrated in respective drawings in the order of FIGS. 7(E) to 7(H) and FIGS. 8(A) to 8(D). Unlike FIGS. 6(C) and 6(D) illustrating the comparative example, the widget having reached the edge of the screen display after the scroll operation is continuously displayed on the back side of screen until the scroll of the main layer ends (see FIG. 8(D)), and therefore it is possible to suppress the sense of discomfort felt by the driver or front occupant with respect to the display of widget.

As described above, in the present embodiment, the screen display of the display 1 includes the main layer positioned in front and the sub layer positioned behind the main layer. The controller 11 detects an operation on the screen display. When the operation on the screen display is a scroll operation, the controller 11 executes the scroll processing of scrolling the main layer. When the widget arranged on the main layer has been scrolled by the scroll processing and reached the edge of the screen display, the controller 11 executes the transfer processing of transferring the widget having reached the edge from the main layer to the sub layer. When the widget reaches the edge of the screen display on the main layer, the widget having reached can be displayed on the sub layer positioned behind the main layer. This prevents the widget from being displayed as if it gradually disappears at the edge of the screen display, even when the main layer is scrolled. As a result, in the scene where the screen display is scrolled, it is possible to suppress the user from feeling a sense of discomfort with respect to the display of widget.

In addition, in the present embodiment, the controller 11 executes the transparency change processing of increasing the transparency of a widget transferred to the sub layer compared to that before being transferred to the sub layer. As a result, the widget transferred to the sub layer is displayed more transparently compared to that before being transferred to the sub layer. Therefore, the movement of the widget to the rear side of screen can be visually expressed. As a result, the driver or front occupant can easily grasp the front-back relationship of the widgets on the main layer.

In addition, in the present embodiment, the controller 11 executes the size change processing of changing the size of a widget transferred to the sub layer compared to that before being transferred to the sub layer. As a result, the widget transferred to the sub layer is transparent and changed in size compared to that before being transferred to the sub layer. Therefore, the movement of the widget from the main layer positioned in front can be visually expressed.

In addition, in the present embodiment, the size change processing includes processing of decreasing the size of the widget transferred to the sub layer compared to that before being transferred to the sub layer. As a result, the widget transferred to the sub layer is displayed smaller than that before being transferred to the sub layer. Accordingly, the movement of the widget to the rear side of screen can be visually expressed. As a result, the driver or front occupant can easily grasp the front-back relationship of the widgets on the main layer.

Further, in the present embodiment, the screen display of the display 1 includes, in addition to the widget display area in which widgets are displayed, the fixed display area that is independent of the scroll operation. The display 1 has a shape elongated in the right-and-left direction relative to the up-and-down direction. The controller 11 displays the fixed display area PA at the upper and lower edges and right and left edges of the screen display. This makes it possible to realize the screen display such as the example illustrated in FIG. 2(B).

In addition, in the present embodiment, the controller 11 sets the boundary between the widget display area and the fixed display area, as the edge of the screen display, and arranges the widget on the sub layer such that the widget transferred to the sub layer is displayed on the inside of the edge of the screen display. This makes it possible to prevent the fixed display area from being displayed overlapping the widget transferred to the sub layer, and therefore displaying the widget on the sub layer is feasible. As a result, in the scene where the screen display is scrolled, it is possible to suppress the user from feeling the sense of discomfort with respect to the display of widget.

In addition, in the present embodiment, the transfer processing includes processing of changing the belonging destination of an object having reached the edge of the screen display from the main layer to the sub layer, thereby displaying the object on the display 1 as a widget arranged on the sub layer. Since relatively simple processing of changing the belonging destination of the widget can realize the transfer from the main layer to the sub layer, the computation load can be reduced.

In addition, in the present embodiment, the object to be operated by the driver or front occupant is a widget of application software and includes the panel portion where information about application software is displayed. When the panel portion of widget has been scrolled by the scroll processing and reached the edge of the screen display, the controller 11 executes processing of transferring the widget including the panel portion having reached the edge from the main layer to the sub layer.

Further, in the present embodiment, the widget includes, in addition to the panel portion, the icon portion of application software and the shadow portion indicating the boundary between the panel portion and the icon portion. Even when an object is composed of multiple elements, like the widget, the transfer processing to the sub layer can be realized.

In addition, in the present embodiment, the scroll processing includes processing of delaying scroll display of the icon portion relative to scroll display of the panel portion. This makes it possible to give the driver or front occupant such a visual effect of the screen display scrolling.

In addition, in the present embodiment, the transfer processing includes processing of displaying, on the display 1, the widget transferred to the sub layer while holding the relationship between scroll display of the panel portion and scroll display of the icon portion on the main layer. This makes it possible to hold the positional relationship between the panel portion and the icon portion before and after the transfer to the sub layer, thereby preventing the driver or front occupant from feeling the sense of discomfort caused due to the transfer to the sub layer with respect to the display of widget.

In addition, in the present embodiment, the processing of detecting the touch operation on the screen display includes processing of detecting the operation speed in the scroll operation. The scroll processing includes processing of changing the scroll display speed of the widget according to the operation speed in the scroll operation. This makes it possible to realize the screen display with a scroll speed corresponding to the operation speed in the scroll operation.

Note that the above-described embodiment has been described for the purpose of facilitating understanding of the present invention, and not for limiting the present invention. Accordingly, respective elements disclosed in the above-described embodiment are intended to include all design modifications and equivalents that fall within the technical scope of the present invention.

For example, although the information processing method and the information processing device according to the present embodiment are described in the above-described embodiment, a program that causes a computer to function as the information processing device 10 according to the present embodiment will exhibit the same effects as the above-described embodiment.

Further, for example, although the above-described embodiment has been described with the information presentation device 100 as an example, the present invention is not limited thereto. The information processing method, information processing device, and program according to the present invention are applicable to a device equipped with a touch panel type display. The information processing method, information processing device, and program according to the present invention are applicable, for example, to a display, a television receiver, or the like, to which a portable terminal such as a smartphone, a tablet terminal, a laptop computer, a personal computer, or the like, is connectable.

Further, for example, in the above-described embodiment, widgets are exemplarily described as objects to be operated by the driver or front occupant. However, the information processing method, information processing device, and program according to the present invention are applicable to objects other than widgets. Further, for example, the widgets described in the above-described embodiment include the panel portion, icon portion, and shadow portion. However, the widgets may be configured to include at least one of the panel portion, icon portion, and shadow portion. Further, for example, in the above-described embodiment, the scroll direction in the scroll operation has been described using the right-and-left direction as an example, but the scroll direction may be the up-and-down direction. Further, for example, in the above-described embodiment, the display 1 has been described using the example having the shape elongated in the right-and-left direction relative to the up-and-down direction, but the display 1 may have a shape elongated in the up-and-down direction relative to the right-and-left direction. Further, for example, in the above-described embodiment, the display 1 has been described using the example whose shape is rectangular, but the shape of the display 1 may not be rectangular. Further, for example, in the above-described embodiment, the exemplary screen display in which the fixed display area is provided around the widget display area has been used. However, in the case of a display elongated in the up-and-down direction relative to the right-and-left direction, the fixed display area may be configured to be displayed at the left and right edges, or either the left edge or the right edge, of the screen display.

### Description of Reference Numerals

- 1: display
- 2: storage device
- 10: information processing device
- 11: controller
- 12: operation detection unit
- 13: main-layer display control unit
- 14: widget display position detection unit
- 15: widget transfer unit
- 16: sub-layer display control unit
- 100: information presentation device

## Claims

1. An information processing method for controlling screen display of a touch panel type display, wherein the screen display includes a first layer positioned in front and a second layer positioned behind the first layer,
the information processing method executed by a controller, comprising
detecting an operation on the screen display;
when the operation is a scroll operation, executing scroll processing of scrolling the first layer; and
when an object arranged on the first layer has been scrolled by the scroll processing and reached an edge of the screen display, executing transfer processing of transferring the object having reached the edge from the first layer to the second layer.

2. The information processing method according to claim 1, comprising
executing transparency change processing of increasing the transparency of the object having been transferred to the second layer compared to that before the object is transferred to the second layer.

3. The information processing method according to claim 1 or 2, comprising
executing size change processing of changing the size of the object having been transferred to the second layer compared to that before the object is transferred to the second layer.

4. The information processing method according to claim 3, wherein the size change processing includes processing of decreasing the size of the object having been transferred to the second layer compared to that before the object is transferred to the second layer.

5. The information processing method according to any one of claims 1 to 4, wherein
the screen display includes, in addition to a display area of the object, a fixed display area that is independent of the scroll operation,
the display has a shape elongated in a right-and-left direction relative to an up-and-down direction, and
the controller displays the fixed display area at a left edge and a right edge, or at either the left edge or the right edge, of the screen display.

6. The information processing method according to claim 5, comprising:
setting, as the edge of the screen display, a boundary between the area where the object is displayed and the fixed display area; and
arranging the object on the second layer such that the object having been transferred to the second layer is displayed on the inside of the boundary.

7. The information processing method according to any one of claims 1 to 6, wherein
the transfer processing includes processing of changing a belonging destination of the object having reached the edge from the first layer to the second layer to display the object arranged on the second layer on the display.

8. The information processing method according to any one of claims 1 to 7, wherein
the object is a widget of application software and includes a panel portion in which information about the application software is displayed, and
the information processing method includes, when the panel portion has been scrolled by the scroll processing and reached the edge of the screen display, executing the transfer processing on the widget including the panel portion having reached the edge.

9. The information processing method according to claim 8, wherein
the widget includes, in addition to the panel portion, at least one of an icon portion of the application software and a shadow portion that displays a shadow on a boundary between the panel portion and the icon portion.

10. The information processing method according to any one of claims 1 to 9, wherein
the object is a widget of application software and includes the panel portion displaying information about application software and the icon portion of the application software, and
the scroll processing includes processing of delaying scroll display of the icon portion relative to scroll display of the panel portion.

11. The information processing method according to claim 10, wherein
the transfer processing includes processing of displaying, on the display, the widget transferred to the second layer while holding the relationship between scroll display of the panel portion and scroll display of the icon portion on the first layer.

12. The information processing method according to claim 10 or 11, wherein
the detecting the operation on the screen display includes processing of detecting an operation speed in the scroll operation, and
the scroll processing includes processing of changing a scroll display speed of widget according to the operation speed.

13. An information processing device comprising
a controller for controlling screen display of a touch panel type display, wherein
the screen display includes a first layer positioned in front and a second layer positioned behind the first layer, and
the controller configured to:
detect an operation on the screen display;
when the operation is a scroll operation, execute scroll processing of scrolling the first layer; and
when an object arranged on the first layer has been scrolled by the scroll processing and reached an edge of the screen display, execute transfer processing of transferring the object having reached the edge from the first layer to the second layer.

14. A program for causing a computer to function as the information processing device according to claim 13.
